# EUROPEAN PATENT APPLICATION

(11) **EP 1 724 084 A1**
(43) Date of publication of application: **22.11.2006**
(21) Application number: 05720130.3
(22) Date of filing: 07.03.2005
(51) Int. Cl.: B29C 33/42, G11B 7/26, B29L 17/00

(54) **DISC MOLDING DIE, ADJUSTING MEMBER AND DISC BOARD MOLDING METHOD**

(30) Priority: 08.03.2004 JP 2004064282
(71) Applicant: SUMITOMO HEAVY INDUSTRIES, LTD., Shinagawa-ku, Tokyo 141-8686 (JP); SEIKOH GIKEN Co., Ltd., Matsudo-shi, Chiba 2702214 (JP)
(72) Inventor: SAWAISHI, Hiroyuki, SUMITOMO HEAVY INDUSTRIES, LTD, Chiba-shi, Chiba 2630001 (JP); GOTO, Yoshiyuki, SEIKOH GIKEN CO., LTD., Matsudo-shi, Chiba 2702214 (JP)
(74) Representative: Geyer, Ulrich F.
(86) International application number: PCT/JP2005/003858
(87) International publication number: WO 2005/084910

(57) **Abstract**

A mold for molding a disk and a method of molding a disk substrate which can enhance flatness and thus quality of a molded product are provided. The mold for molding a disk includes a first mirror-surface disk; a stamper (29) attached to the first mirror-surface disk; a second mirror-surface disk disposed in opposition to the first mirror-surface disk and forming a cavity therebetween at the time of mold clamping; and an adjustment member having a surface allowing the stamper (29) to slide thereon, formed near an outer circumference of the first mirror-surface disk, extending radially outward, and projecting toward the cavity. Even when, during the entire disk substrate being cooled, shrinkage of the disk substrate near the outer circumference thereof is small, whereas shrinkage of the remaining portion thereof is large, an increase in thickness of the disk substrate near the outer circumference thereof can be prevented.

## Description

### TECHNICAL FIELD

The present invention relates to a mold for molding a disk, an adjustment member, and a method of molding a disk substrate.

### BACKGROUND ART

Conventionally, in a molding machine; for example, an injection molding machine, resin which is melted in a heating cylinder through application of heat is injected under high pressure into a cavity of a mold apparatus, and molten resin is cooled and solidified within the cavity, followed by ejection of a molded product.

The injection molding machine includes the mold apparatus, a mold-clamping apparatus, and an injection apparatus. The mold-clamping apparatus includes a stationary platen and a movable platen. A mold-clamping motor advances or retreats the movable platen, thereby performing mold closing, mold clamping, and mold opening of the mold apparatus.

The injection apparatus includes the heating cylinder and an injection nozzle for ejecting molten resin. A screw is disposed within the heating cylinder rotatably and in a manner capable of advancing and retreating. When the screw is rotated by driving a metering motor, resin which is supplied into the heating cylinder from a hopper is melted through application of heat. Molten resin is stored ahead of a screw head, and the screw is retreated. Next, when the screw is advanced by driving an injection motor, molten resin stored ahead of the screw head is injected into the cavity from the injection nozzle and fills the cavity.

In the case where the molded product is a disk substrate, a stamper is attached to a stationary-side mold assembly which partially constitutes the mold apparatus. The stamper transfers a fine pattern onto the resin contained in the cavity (refer to, for example, Patent Document 1).
Patent Document 1: Japanese Patent Application Laid-Open (kokai) No. 10-166396

### DISCLOSURE OF THE INVENTION

### PROBLEMS TO BE SOLVED BY THE INVENTION

However, in the conventional mold apparatus, after resin is supplied to a gate formed at the center of the cavity, the resin flows within the cavity radially outward. Since the outer circumference of the mold apparatus is in contact with the ambient air, the temperature of the resin is lower in the vicinity of the outer circumference of the cavity than in the other region of the cavity. Accordingly, the resin in the vicinity of the outer circumference of the cavity is solidified with high density, whereas the resin in the other region of the cavity is solidified with low density.

Accordingly, when the entire disk substrate is cooled as a result of subsequent mold opening, shrinkage of a portion of the disk substrate in the vicinity of the outer circumference of the cavity is small in accordance with high density, whereas shrinkage of the remaining portion of the disk substrate is large in accordance with low density. As a result, the thickness of the disk substrate as measured in the vicinity of the outer circumference thereof becomes 10 µm to 20 µm greater than that of the remaining portion of the disk substrate; i.e., flatness of the disk substrate is impaired, resulting in an impairment in quality of the disk substrate.

An object of the present invention is to solve the above-mentioned problems in the conventional mold apparatus and to provide a mold for molding a disk, an adjustment member, and a method of molding a disk substrate which can enhance flatness of a disk substrate to thereby improve quality of the disk substrate.

### MEANS FOR SOLVING THE PROBLEMS

To achieve the above object, a mold for molding a disk of the present invention comprises a first mirror-surface disk; a stamper attached to the first mirror-surface disk; a second mirror-surface disk disposed in opposition to the first mirror-surface disk, the first mirror-surface disk and the second mirror-surface disk forming a cavity therebetween at the time of mold clamping; and an adjustment member having a surface allowing the stamper to slide thereon, and formed in the vicinity of an outer circumference of the first mirror-surface disk in such a manner as to extend radially outward and to project toward the cavity.

In another mold for molding a disk of the present invention, the surface of the adjustment member is a tapered surface.

In still another mold for molding a disk of the present invention, the surface of the adjustment member is curved.

In yet another mold for molding a disk of the present invention, the adjustment member is disposed such that an inner circumference thereof is located 0.2 mm to 2 mm radially inward from an outer circumference of a disk substrate.

In a further mold for molding a disk of the present invention, a thickness of the adjustment member as measured at an outer circumference thereof is 10 µm to 50 µm greater than a thickness of the adjustment member as measured at an inner circumference thereof.

In a still further mold for molding a disk of the present invention, the adjustment member is formed from a material lower in thermal conductivity than the first mirror-surface disk.

An adjustment member of the present invention is disposed in a mold for molding a disk which comprises a first mirror-surface disk, a stamper attached to the first mirror-surface disk, and a second mirror-surface disk disposed in opposition to the first mirror-surface disk, the first mirror-surface disk and the second mirror-surface disk forming a cavity therebetween at the time of mold clamping.

The adjustment member comprises a surface allowing the stamper to slide thereon and is formed in the vicinity of an outer circumference of the first mirror-surface disk in such a manner as to extend radially outward and to project toward the cavity.

In another adjustment member of the present invention, the surface is a tapered surface.

In still another adjustment member of the present invention, the surface is curved.

Yet another adjustment member of the present invention is disposed such that an inner circumference thereof is located 0.2 mm to 2 mm radially inward from an outer circumference of a disk substrate.

In a further adjustment member of the present invention, a thickness thereof as measured at an outer circumference thereof is 10 µm to 50 µm greater than a thickness thereof as measured at an inner circumference thereof.

In a still further adjustment member of the present invention, the adjustment member is formed from a material lower in thermal conductivity than the first mirror-surface disk.

In a method of molding a disk substrate of the present invention, a fine pattern of a stamper disposed on either a movable-side mold assembly or a stationary-side mold assembly is transferred to the disk substrate.

The method of molding a disk comprises moving the movable-side mold assembly toward the stationary-side mold assembly; forming a cavity between the movable-side mold assembly and the stationary-side mold assembly for charging a molding material thereinto; allowing the stamper to slide on an adjustment member for adjusting a variation in thickness of the disk substrate toward an outer circumference of the disk substrate when the stamper in contact with either the movable-side mold assembly or the stationary-side mold assembly expands in association with charge of the molding material into the cavity; cooling the molding material within the cavity; allowing the stamper to slide on the adjustment member when the stamper in contact with either the movable-side mold assembly or the stationary-side mold assembly contracts in association with cooling of the molding material; and moving the movable-side mold assembly away from the stationary-side mold assembly.

### EFFECT OF THE INVENTION

According to the present invention, the mold for molding a disk comprises the first mirror-surface disk; the stamper attached to the first mirror-surface disk; the second mirror-surface disk disposed in opposition to the first mirror-surface disk, the first mirror-surface disk and the second mirror-surface disk forming a cavity therebetween at the time of mold clamping; and the adjustment member having a surface allowing the stamper to slide thereon, and formed in the vicinity of an outer circumference of the first mirror-surface disk in such a manner as to extend radially outward and to project toward the cavity.

In this case, the adjustment member is formed in the vicinity of the outer circumference of the first mirror-surface disk and comprises a surface which allows the stamper to slide thereon. Even when, during the course of the entire disk substrate being cooled, shrinkage of the disk substrate in the vicinity of the outer circumference of the cavity is small in accordance with high density, whereas shrinkage of the remaining portion thereof is large in accordance with low density, this structural feature prevents an increase in thickness of the disk substrate in the vicinity of the outer circumference of the cavity. Accordingly, flatness of the disk substrate can be enhanced, and quality can be improved accordingly.

Since no stepped portion is formed in the boundary between the adjustment member and the first mirror-surface disk, the rear surface of the stamper is free from repeated rubbing by a stepped portion. This feature can suppress occurrence of local wear of a portion of the rear surface of the stamper in the vicinity of the outer circumference thereof and thus can prevent local unevenness in temperature of the stamper. As a result, local birefringence, loss of shape in lands and grooves, or a like problem can be prevented, whereby quality of the disk substrate can be improved.

### BRIEF DESCRIPTION OF THE DRAWINGS

FIG. 1 is a sectional view showing essential portions of a mold apparatus according to a first embodiment of the present invention.
FIG. 2 is a sectional view of the mold apparatus according to the first embodiment of the present invention.
FIG. 3 is a sectional view showing essential portions of a mold apparatus according to a second embodiment of the present invention.

### DESCRIPTION OF REFERENCE NUMERALS

- 10:: mold apparatus
- 16, 36:: mirror-surface disk
- 29:: stamper
- 52:: thickness adjustment member
- p1:: inner circumference
- p3:: outer circumference
- s1:: front end surface

### BEST MODE FOR CARRYING OUT THE INVENTION

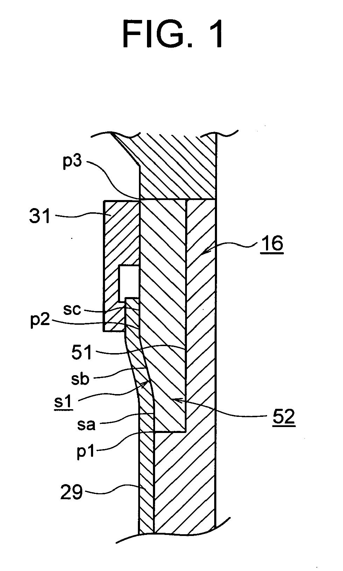

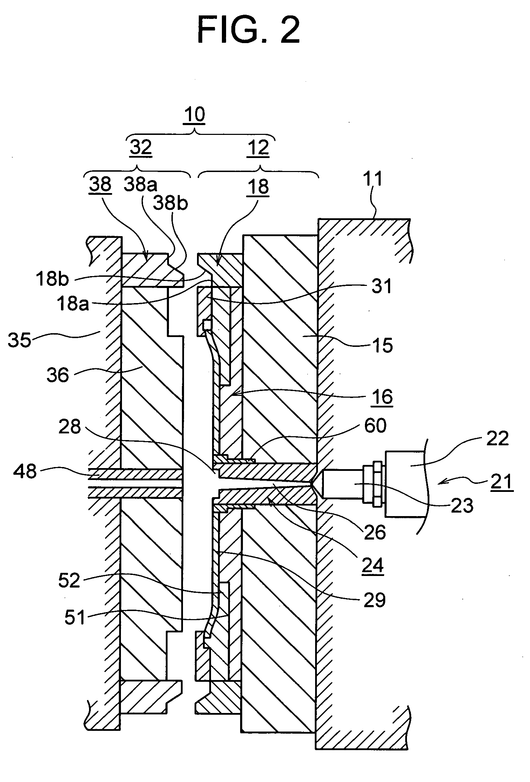

FIG. 1 is a sectional view showing essential portions of a mold apparatus according to a first embodiment of the present invention. FIG. 2 is a sectional view of the mold apparatus according to the first embodiment of the present invention.

In the drawings, reference numeral 10 denotes a mold apparatus; reference numeral 11 denotes a stationary platen; reference numeral 12 denotes a stationary-side mold assembly which serves as a stationary mold attached to the stationary platen 11 and as a first mold assembly; and reference numeral 32 denotes a movable-side mold assembly which serves as a movable mold attached to an unillustrated mold platen and as a second mold assembly. The mold assemblies 12 and 32 constitute the mold apparatus 10. An unillustrated mold-clamping mechanism is disposed behind the movable platen. The mold-clamping mechanism includes, for example, a mold-clamping motor and a toggle mechanism which serve as a drive section for clamping a mold. Operation of the toggle mechanism effected by driving the mold-clamping motor advances and retreats the movable platen, whereby the mold assembly 32 advances and retreats (moves rightward and leftward in FIG. 2) to come into contact with and move away from the mold assembly 12. In this manner, the mold apparatus 10 can undergo mold closing, mold clamping, and mold opening. When mold clamping is performed, an unillustrated cavity is formed between the mold assembly 12 and the mold assembly 32. The stationary platen 11, the movable platen, the mold-clamping mechanism, and the like constitute a mold-clamping apparatus.

The mold assembly 12 includes a base plate 15 which serves as a first support member; a mirror-surface disk 16 which is attached to the base plate 15 and serves as a first mirror-surface disk; an annular guide ring 18 which is disposed radially outward of the mirror-surface disk 16, is attached to the base plate 15, and serves as a first outer ring; and a sprue bush 24 extending axially through the base plate 15 and through the mirror-surface disk 16.

A sprue 26 is formed along the axis of the sprue bush 24 in order to allow passage of resin which serves as a molding material and is ejected from an injection nozzle 23 of an injection apparatus 21. In the injection apparatus 21, the injection nozzle 23 is attached to the front end (left end in FIG. 2) of a heating cylinder 22 which serves as a cylinder member. A die 28 having a recess is formed at the front end of the sprue bush 24 such that the front end thereof faces the cavity.

Meanwhile, when resin is fed into the cavity and allowed to solidify therein, a prototype substrate is formed. The prototype substrate is a prototype for a disk substrate which serves as a molded product. At this time, fine pits and projections are formed on one side of the disk substrate, thereby forming an information side. In order to form the fine pits and projections, a disk-like stamper 29 is attached, as an insert, to the front end surface (left end surface in FIG. 2) of the mirror-surface disk 16. The stamper 29 has a hole formed therein at its center and has a fine pattern formed thereon. The fine pattern consisting of fine pits and projections is formed on the front end surface of the stamper 29. The stamper 29 is pressed against the mirror-surface disk 16 by means of an outer holder 31 which holds its outer circumferential edge and by means of an inner holder 60 which holds its inner circumferential edge. An unillustrated stationary-side air blow bush and the like are also disposed on the mold assembly 12. Notably, the stamper can be disposed on the mold assembly 32.

The mold assembly 32 includes a base plate 35 which serves as a second support member; a mirror-surface disk 36 which is attached to the base plate 35 and serves as a second mirror-surface disk; an annular guide ring 38 which is disposed radially outward of the mirror-surface disk 36 and serves as a second outer ring; and a cut punch 48 extending axially through the base plate 35 and through the mirror-surface disk 36 and disposed in opposition to the sprue bush 24 and in a manner capable of advancing and retreating. The front end (right end in FIG. 2) of the cut punch 48 has a shape corresponding to the die 28.

An unillustrated annular cavity ring is disposed on an outer circumferential edge of the surface of the mirror-surface disk 36, which faces the mirror-surface disk 16, in such a manner as to project toward the mirror-surface disk 16 by a dimension corresponding to the thickness of a disk substrate to be molded.

An unillustrated drive cylinder which serves as a drive section for punching is disposed rearward (leftward in FIG. 2) of the cut punch 48. By driving the drive cylinder, the cut punch 48 is advanced (moved rightward in FIG. 2).

Although unillustrated, an ejector bush, an ejector pin, a movable-side air blow bush, and the like are also disposed in the mold assembly 32.

In the thus-configured mold apparatus 10, when the movable platen is advanced by driving the mold-clamping motor to thereby advance the mold assembly 32, mold closing is performed, and the guide rings 18 and 38 are joined by means of rabbets, thereby aligning the cavity ring and the mirror-surface disk 36 with the mirror-surface disk 16 and the stamper 29. The mold-clamping motor is further driven for performing mold clamping. In the mold-clamped condition, molten resin is ejected from the injection nozzle 23. The resin is charged into the cavity through the sprue 26. Subsequently, the charged resin is cooled and becomes a prototype substrate. In order to join the guide rings 18 and 38 by means of rabbets, an annular rabbet 18a is formed on the guide ring 18 on a side toward the inner circumference, and an annular rabbet 38a is formed on the guide ring 38 on a side toward the outer circumference. A first taper surface 18b is formed radially outward of the annular rabbet 18a, and a second taper surface 38b is formed radially inward of the annular rabbet 38a. In order to cool the resin within the cavity, an unillustrated temperature control medium passage is formed in each of the mirror-surface disks 16 and 36.

Subsequently, the drive cylinder is driven so as to advance the cut punch 48. The front end of the cut punch 48 enters the die 28, thereby punching a hole in the prototype substrate within the cavity. The punched prototype substrate is further cooled and becomes a disk substrate.

Next, the mold-clamping motor is driven so as to retreat the movable platen, thereby retreating (moving leftward in FIG. 2) the mold assembly 32 for performing mold opening. Also, the ejector pin is advanced, thereby pushing out the disk substrate from the mold assembly 32. In this manner, the disk substrate can be taken out.

Meanwhile, resin which is ejected from the injection nozzle 23 flows through the sprue 26, is fed to the gate formed at the center of the cavity, and then flows radially outward within the cavity. Since the outer circumference of the mold apparatus 10 is in contact with the ambient air, the temperature of resin is lower in the vicinity of the outer circumference of the cavity than in the other region of the cavity. Accordingly, resin in the vicinity of the outer circumference of the cavity is solidified with high density, whereas resin in the other region is solidified with low density.

Accordingly, when the entire disk substrate is cooled as a result of subsequent mold opening, shrinkage of a portion of the disk substrate in the vicinity of the outer circumference of the cavity is small in accordance with high density, whereas shrinkage of the remaining portion of the disk substrate is large in accordance with low density. As a result, the thickness of the disk substrate as measured at a portion corresponding to the vicinity of the outer circumference of the cavity is increased; i.e., flatness of the disk substrate is impaired, resulting in an impairment in quality of the disk substrate.

In order to cope with the above problem, the front end surface of at least one of the mirror-surface disks 16 and 36 (in the present embodiment, the mirror-surface disk 16), which abuts the stamper 29, is formed such that a portion in the vicinity of its outer circumference projects frontward (leftward in FIG. 2); i.e., toward the mold assembly 32.

The above feature of the present embodiment is implemented as follows: an annular groove 51 is formed on the front end surface, which abuts the stamper 29, of the mirror-surface disk 16 in the vicinity of the outer circumference thereof; and an annular thickness adjustment member 52 which serves as an adjustment member is fitted into the groove 51. The thickness adjustment member 52 is adapted to adjust a variation in thickness of the disk substrate toward an outer circumference of the disk substrate. A front end surface s1 of the thickness adjustment member 52 includes a surface (hereinafter called the "sliding surface") which extends from an inner circumference p1 to a central portion p2 and projects toward the cavity; i.e., frontward, and which allows the shrinking stamper 29 to slide thereon. The sliding surface includes a flat portion sa which extends radially outward and in parallel with the front end surface of the mirror-surface disk 16 over a predetermined distance from the inner circumference p1; an inclined portion sb which extends radially outward and in an inclined fashion over a predetermined distance from the outer circumference of the flat portion sa to the central portion p2; and a flat portion sc which extends radially outward and in parallel with the front end surface of the mirror-surface disk 16 over a predetermined distance from the outer circumference of the inclined portion sb and which reaches the outer circumference of the stamper 29.

In order to avoid forming a stepped portion between the thickness adjustment member 52 disposed in the groove 51 and the mirror-surface disk 16 at the inner circumference p1 of the thickness adjustment member 52, the depth of the groove 51 as measured at the inner circumference thereof and the thickness of the thickness adjustment member 52 as measured at the inner circumference p1 are equal to each other. Notably, the front end surface s1 can be a tapered surface which is inclined uniformly from radially inner side to radially outer side. Alternatively, the front end surface s1 can be curved such that inclination thereof is gradually increased toward radially outer side from the inner circumference p1 where inclination is zero (0), and is then gradually decreased toward the central portion p2 where inclination is zero (0). Since the front end surface s1 is formed as described above, when resin is charged into the cavity, the stamper 29 which expands radially outward can readily slide on the front end surface s1.

The thickness adjustment member 52 is disposed such that the inner circumference p1 is located 0.2 mm to 2 mm radially inward from the outer circumference of the disk substrate. The thickness of the thickness adjustment member 52 as measured at a portion ranging from the central portion p2 to an outer circumference p3 is 10 µm to 50 µm greater than the thickness of the thickness adjustment member 52 as measured at the inner circumference p1.

As described above, the thickness adjustment member 52 is disposed in the vicinity of the outer circumference of the mirror-surface disk 16 and has the tapered surface for facilitating sliding of the stamper when the stamper expands radially outward at the time of charging resin into the cavity. Thus, the thickness of the disk substrate as measured in the vicinity of the outer circumference of the cavity becomes about 10 µm to 50 µm thinner than the thickness of the disk substrate as measured in the other region. Accordingly, even when, during the course of the entire disk substrate being cooled in association with mold opening, shrinkage of the disk substrate in the vicinity of the outer circumference of the cavity is small in accordance with high density, whereas shrinkage of the remaining portion thereof is large in accordance with low density, an increase in thickness of the disk substrate in the vicinity of the outer circumference of the cavity can be prevented. As a result, flatness of the disk substrate can be enhanced, and quality can be improved accordingly.

During the course of molding, resin is intermittently charged into the cavity and is then cooled. Accordingly, the stamper 29 repeatedly undergoes heating and cooling and thus repeatedly expands and contracts. Since no stepped portion is formed between the thickness adjustment member 52 and the mirror-surface disk 16 at the inner circumference p1, the stamper 29 is attached along the profile of the thickness adjustment member 52 and the mirror-surface disk 16, the cavity being formed between the mirror-surface disk 36 and an assembly of the thickness adjustment member 52 and the mirror-surface disk 16. Thus, the rear surface of the stamper 29 is free from repeated rubbing by a stepped portion, thereby suppressing occurrence of local wear of a portion of the rear surface of the stamper 29 in the vicinity of the outer circumference thereof and thus preventing local unevenness in temperature of the stamper 29. As a result, occurrence of local birefringence, loss of shape in lands and grooves, or a like problem on the disk substrate can be prevented, whereby quality of the disk substrate can be improved.

Formation of the above-mentioned stepped portion is accompanied by formation of an annular space partially defined by the mirror-surface disk 16, the stamper 29, and the thickness adjustment member 52. As the stamper 29 repeatedly expands and contracts, a contact region between the annular space and the stamper 29 moves. As a result, local unevenness in temperature of the stamper 29 arises. By contrast, in the present embodiment, such a stepped portion is not formed; thus, heat transfer can be stabilized between the stamper 29 and the mirror-surface disk 16 and between the stamper 29 and the thickness adjustment member 52, thereby preventing occurrence of local unevenness in temperature of the stamper 29. Therefore, occurrence of local birefringence, loss of shape in lands and grooves, or a like problem on the disk substrate can further be prevented, whereby quality of the disk substrate can further be improved.

In the present embodiment, the same material as that used to form the mirror-surface disk 16 is used to form the thickness adjustment member 52. However, the thickness adjustment member 52 can be formed of a material lower in thermal conductivity than the mirror-surface disk 16, a thermally insulative material, or a like material. Use of such a material can prevent the temperature of resin in the vicinity of the outer circumference of the cavity from becoming lower than in the other region, thereby preventing resin in the vicinity of the outer circumference of the cavity from solidifying with high density.

Accordingly, when the entire disk substrate is cooled as a result of subsequent mold opening, shrinkage of a portion of the disk substrate in the vicinity of the outer circumference of the cavity can be prevented from becoming smaller than shrinkage of the other portion of the disk substrate. Thus, flatness of the disk substrate can be enhanced, and quality can be improved accordingly.

Since the present embodiment requires formation of the flat portion sa on the thickness adjustment member 52, machining the inclined portion sb is difficult; thus, the cost of the thickness adjustment member 52 is increased.

Next will be described a second embodiment of the present invention which allows a reduction in cost of the thickness adjustment member 52. Like structural elements of the first and second embodiments are denoted by like reference numerals, and repeated description thereof is omitted.

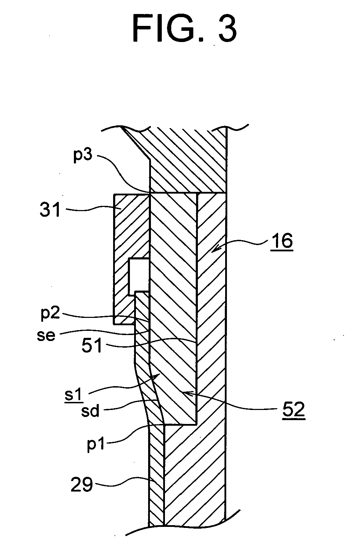

FIG. 3 is a sectional view showing essential portions of a mold apparatus according to the second embodiment of the present invention.

In this case, a sliding surface formed on the front end surface s1 includes an inclined portion sd which extends radially outward and in an inclined fashion over a predetermined distance from the inner circumference p1; and a flat portion se which extends radially outward and in parallel with the front end surface of the mirror-surface disk 16 over a predetermined distance from the outer circumference of the inclined portion sd to the outer circumference of the stamper 29.

Accordingly, when resin is charged into the cavity, the stamper 29 which expands radially outward can readily slide.

As a result, the inclined portion sd can be readily machined, and the cost of the thickness adjustment member 52 can be reduced.

In a method of molding a disk substrate by use of the mold for molding a disk which is configured as described above, the mold assembly 32 is moved toward the mold assembly 12 to thereby form a cavity therebetween; and when the stamper 29 in contact with the mold assembly 12 expands in association with charge of resin into the cavity, the thickness adjustment member 52 allows the stamper 29 to slide thereon. The resin within the cavity is cooled, thereby producing a molded disk substrate. As the resin is cooled, the stamper 29 contracts while being in contact with the mold assembly 12. Also, in this case, the thickness adjustment member 52 allows the stamper 29 to slide thereon.

Subsequently, the mold assembly 32 is moved away from the mold assembly 12.

The above embodiments are described while mentioning a case where the stamper 29 expands and contracts in association with heat transfer from the disk substrate. However, the present invention can also be applied to a case where the stamper 29 expands and contacts in association with subjection to pressure within the cavity which is generated when resin is charged into the cavity, pressure within the cavity which is generated by mold-clamping force applied for compressing resin within the cavity, or the like.

The present invention is not limited to the above-described embodiments. Numerous modifications and variations of the present invention are possible in light of the spirit of the present invention, and they are not excluded from the scope of the present invention.

### INDUSTRIAL APPLICABILITY

The present invention can be applied to a mold for molding a disk substrate.

## Claims

1. A mold for molding a disk, comprising:
(a) a first mirror-surface disk;
(b) a stamper attached to the first mirror-surface disk;
(c) a second mirror-surface disk disposed in opposition to the first mirror-surface disk, the first mirror-surface disk and the second mirror-surface disk forming a cavity therebetween at the time of mold clamping; and
(d) an adjustment member having a surface allowing the stamper to slide thereon, and formed in the vicinity of an outer circumference of the first mirror-surface disk in such a manner as to extend radially outward and to project toward the cavity.

2. A mold for molding a disk according to claim 1, wherein the surface of the adjustment member is a tapered surface.

3. A mold for molding a disk according to claim 1, wherein the surface of the adjustment member is curved.

4. A mold for molding a disk according to claim 1, wherein the adjustment member is disposed such that an inner circumference thereof is located 0.2 mm to 2 mm radially inward from an outer circumference of a disk substrate.

5. A mold for molding a disk according to claim 1, wherein a thickness of the adjustment member as measured at an outer circumference thereof is 10 µm to 50 µm greater than a thickness of the adjustment member as measured at an inner circumference thereof.

6. A mold for molding a disk according to claim 1, wherein the adjustment member is formed from a material lower in thermal conductivity than the first mirror-surface disk.

7. An adjustment member to be disposed in a mold for molding a disk comprising a first mirror-surface disk, a stamper attached to the first mirror-surface disk, and a second mirror-surface disk disposed in opposition to the first mirror-surface disk, the first mirror-surface disk and the second mirror-surface disk forming a cavity therebetween at the time of mold clamping, comprising:
(a) a surface allowing the stamper to slide thereon,
(b) wherein the adjustment member is formed in the vicinity of an outer circumference of the first mirror-surface disk in such a manner as to extend radially outward and to project toward the cavity.

8. An adjustment member according to claim 7, wherein the surface is a tapered surface.

9. An adjustment member according to claim.7, wherein the surface is curved.

10. An adjustment member according to claim 7, disposed such that an inner circumference thereof is located 0.2 mm to 2 mm radially inward from an outer circumference of a disk substrate.

11. An adjustment member according to claim 7, wherein a thickness thereof as measured at an outer circumference thereof is 10 µm to 50 µm greater than a thickness thereof as measured at an inner circumference thereof.

12. An adjustment member according to claim 7, wherein the adjustment member is formed from a material lower in thermal conductivity than the first mirror-surface disk.

13. A method of molding a disk substrate in which a fine pattern of a stamper disposed on either a movable-side mold assembly or a stationary-side mold assembly is transferred to the disk substrate, comprising:
(a) moving the movable-side mold assembly toward the stationary-side mold assembly;
(b) forming a cavity between the movable-side mold assembly and the stationary-side mold assembly for charging a molding material thereinto;
(c) allowing the stamper to slide on an adjustment member for adjusting a variation in thickness of the disk substrate toward an outer circumference of the disk substrate when the stamper in contact with either the movable-side mold assembly or the stationary-side mold assembly expands in association with charge of the molding material into the cavity;
(d) cooling the molding material within the cavity;
(e) allowing the stamper to slide on the adjustment member when the stamper in contact with either the movable-side mold assembly or the stationary-side mold assembly contracts in association with cooling of the molding material; and
(f) moving the movable-side mold assembly away from the stationary-side mold assembly.
